(19) Europäisches Patentamt
European Patent Office
Office européen des brevets

(11) **EP 1 339 951 B1**

(12) **FASCICULE DE BREVET EUROPEEN**

(45) Date de publication et mention
de la délivrance du brevet:
**08.01.2020 Bulletin 2020/02**

(21) Numéro de dépôt: **01999722.0**

(22) Date de dépôt: **12.11.2001**

(51) Int Cl.:
***E21B 49/00*** *(2006.01)*

(86) Numéro de dépôt international:
**PCT/FR2001/003513**

(87) Numéro de publication internationale:
**WO 2002/046563 (13.06.2002 Gazette 2002/24)**

(54) **PROCEDE ET DISPOSITIF POUR DETERMINER LA QUALITE DE RESERVE D'UN PUITS DE PETROLE**

VERFAHREN UND VORRICHTUNG ZUR BESTIMMUNG DER QUALITÄT DER RESERVEN EINER ÖLFORMATION

METHOD AND DEVICE FOR DETERMINING THE QUALITY OF AN OIL WELL RESERVE

(84) Etats contractants désignés:
**AT BE CH CY DE DK ES FI FR GB GR IE IT LI LU MC NL PT SE TR**

(30) Priorité: **04.12.2000 FR 0015647**

(43) Date de publication de la demande:
**03.09.2003 Bulletin 2003/36**

(73) Titulaire: **Sondex Limited**
**Blackbushe Business Park**
**Yateley**
**Hampshire GU46 6AB (GB)**

(72) Inventeurs:
 • **DESPAX, Damien**
 **13090 Aix-en-Provence (FR)**
 • **DOVIS, Robert**
 **13090 Aix-en-Provence (FR)**
 • **FEDELE, Jean-Michel**
 **13400 Marignane (FR)**
 • **MARTIN, Jean-Pierre**
 **27100 Le Vaudreuil (FR)**

(74) Mandataire: **BRP Renaud & Partner mbB**
**Rechtsanwälte Patentanwälte**
**Steuerberater**
**Königstraße 28**
**70173 Stuttgart (DE)**

(56) Documents cités:
**FR-A- 2 435 025      FR-A- 2 477 284**
**FR-A- 2 678 679      US-A- 3 318 145**
**US-A- 3 559 476      US-A- 4 157 528**

EP 1 339 951 B1

**Description**

La présente invention concerne les procédés et les dispositifs pour déterminer la qualité de réserve d'un puits de pétrole débitant un fluide donné provenant d'une couche productrice, par la mesure de la réponse R du puits.

On sait que le pétrole est produit à partir de puits qui sont réalisés dans les champs pétrolifères, et que ces champs pétrolifères se trouvent dans différents types de sol et sous-sol qui n'ont pas tous la même qualité de production. Cette qualité est essentiellement représentée par l'index de productivité IP du puits qui dépend du rayon du puits $r_w$, du rayon de drainage $R_e$ du puits, de la viscosité $\mu$ du pétrole récupérable, mais aussi de la transmissivité de la couche productrice qui est définie comme le produit de sa perméabilité k par sa hauteur **h**, ainsi que d'un éventuel colmatage des pores de la roche aux abords de la paroi du puits que l'on quantifie par un paramètre sans dimension **S** communément qualifié par les techniciens par le terme générique de « SKIN ». Cet index de productivité est représenté par la formule :

$$IP = \frac{2\pi\,kh}{\mu[\ln(\frac{R_e}{r_W})-0,75+S]}$$

où "ln" représente le logarithme népérien.

L'index de productivité IP mesure directement la facilité avec laquelle le pétrole peut s'écouler jusqu'au puits sous l'effet d'un rabattement $\Delta P$ de la pression moyenne du gisement régnant autour du puits, puisque le débit **Q** du puits mesuré en conditions de fond est alors simplement égal à : Q=IP$\Delta$P

Ce débit de fond est ensuite évacué vers la surface selon des techniques connues en elles-mêmes.

Afin d'optimiser la production d'un puits, notamment de pétrole, il est donc utile de connaître sa qualité réserve, notamment en déterminant la valeur de certains paramètres prédéfinis. En se reportant à l'expression de l'index de productivité IP défini ci-dessus, un premier paramètre important est la perméabilité k de la couche productrice du sous-sol dans lequel le puits a été foré et un autre est le « SKIN » S qui quantifie un possible endommagement de cette couche productrice. On peut ainsi établir deux classes parmi les puits qui produisent peu : les puits maintenus dans des conditions d'exploitation idéales (S = 0) mais qui soutirent le pétrole d'une roche faiblement perméable, et les puits forés dans des gisements présentant une perméabilité élevée mais qui sont colmatés (S > 0) et qui pourront produire d'avantage quand ils auront été restaurés à l'aide de techniques connues en elles-mêmes.

Il est donc important de pouvoir déceler la formation d'une couche de colmatage afin d'intervenir le plus tôt possible de façon utile pour l'éliminer et continuer l'exploitation du puits.

Différents procédés ont été mis au point pour surveiller la qualité de production d'un puits. La plupart des anciens procédés étaient fondés sur l'utilisation de relations empiriques ou statistiques entre différentes mesures qui peuvent être effectuées sur un tel puits. Un autre procédé donnant des résultats plus précis consiste à obturer complètement le puits à sa sortie et à étudier la montée en pression du pétrole dans le puits en fonction du temps de fermeture, l'examen des courbes de variation de cette pression permettant de déduire si le puits est dans son état idéal ou s'il est colmaté.

Ce procédé permet d'obtenir de bons résultats, mais présente l'inconvénient majeur d'être long à être mis en œuvre. Pour obtenir une courbe exploitable, il faut en effet attendre plusieurs heures voire plusieurs jours pour certains puits pendant lesquels le puits n'est pas exploité, ce qui constitue un manque à gagner certain auquel il faut ajouter le coût du redémarrage lorsque la pression du gisement n'est plus suffisante pour que le puits demeure éruptif.

Pour pallier cet inconvénient, on a alors tenté de mettre au point un autre procédé qui consiste à moduler la fermeture du puits à sa sortie et à étudier la variation de pression du fluide en fonction de cette modulation. Ce procédé élimine l'inconvénient mentionné ci-dessus de la fermeture totale du puits, mais présente l'inconvénient de ne pas conduire à des mesures assez précises.

Un autre procédé est par exemple décrit dans le US-A-3.559.476 et le FR-A-2.678.679. Il consiste à moduler, par une fonction sinusoïdale, le débit du fluide dans le puits et à mesurer les variations de débit et de pression du fluide, puis à en déduire, dans des cas particuliers, la réponse R du puits.

Ce procédé donne des résultats relativement satisfaisants dans le cas d'un endommagement du puits qui consiste en un colmatage de la paroi qui donne un "SKIN" d'une valeur positive, mais d'une épaisseur considérée comme nulle. Il est bien évident que ce type de « SKIN » infiniment mince n'est qu'une abstraction mathématique commode et souvent satisfaisante mais qu'il peut exister d'autres types d'endommagement qui correspondent à un "SKIN" positif mais dont l'épaisseur ne peut être considérée comme nulle, ou un "SKIN" négatif, par exemple pour un puits relié à un réseau de fissures naturelles ouvertes ou pour un puits stimulé par fracturation hydraulique, c'est-à-dire traversé par une fracture induite artificiellement qui est généralement symétrique par rapport à l'axe du puits.

La présente invention a donc pour but de pallier les inconvénients mentionnés ci-dessus des procédés antérieurs pour évaluer la qualité de réserve d'un puits de pétrole ou analogue, et de mettre en œuvre un procédé qui, tout en étant facile à être mis en œuvre, permette d'obtenir cette évaluation à tous les niveaux du puits et quel que soit le type d'endommagement de la couche productrice, à l'aide de mesures qui peuvent être interprétées avec un faible pourcentage d'erreurs ou d'incertitude.

La présente invention a aussi pour but de réaliser un dispositif permettant de mettre en œuvre ce procédé.

Plus précisément, la présente invention a pour objet un procédé pour déterminer la qualité de réserve d'un puits de pétrole ou analogue débitant un fluide donné provenant d'une couche productrice, par la mesure de la réponse (R) du puits, ledit procédé consistant à moduler, par une fonction sinusoïdale, le débit du fluide dans le puits, et à mesurer les variations de débit et de pression du fluide, la qualité de réserve étant essentiellement représentée par l'index de productivité du puits, le procédé étant caractérisé par le fait que

- (I) la réponse (Rc) du puits dans le cas où la couche productrice comporte une zone endommagée présentant un "SKIN" positif d'épaisseur non nulle, est obtenue par l'équation :

$$Rc = \frac{DR_0(\beta z_w) - B}{-CR_0(\beta z_w) + A},$$

et que
- (II) la réponse (Rf) du puits dans le cas où la couche productrice comporte

une fracture présentant un "SKIN" négatif, est obtenue par l'équation :

$$R_f = \frac{\pi}{F_{CD}\sqrt{\dfrac{i z_f^2}{E_{fD}} + \dfrac{2\sqrt{i}\, z_f}{F_{CD}}}} + S_{wf}$$

équations dans lesquelles :
A, B, C et D sont des fonctions des paramètres $Z_w$, $\alpha$ et $\beta$ définis ci-après, et sont respectivement définies par les quatre équations ci-dessous :

$$A(z_w, \alpha, \beta) = i\frac{z_w}{\sqrt{\alpha}} e^{\frac{i\pi}{4}} [kelbe_0(\frac{\beta z_w}{\sqrt{\alpha}})kelke_1(\frac{z_w}{\sqrt{\alpha}}) - kelbe_1(\frac{z_w}{\sqrt{\alpha}})kelke_0(\frac{\beta z_w}{\sqrt{\alpha}})]$$

$$B(z_w, \alpha, \beta) = \frac{1}{\alpha} [kelbe_0(\frac{z_w}{\sqrt{\alpha}})kelke_0(\frac{\beta z_w}{\sqrt{\alpha}}) - kelbe_0(\frac{\beta z_w}{\sqrt{\alpha}})kelke_0(\frac{z_w}{\sqrt{\alpha}})]$$

$$C(z_w, \alpha, \beta) = i\beta z_w^2 [kelbe_1(\frac{z_w}{\sqrt{\alpha}})kelke_1(\frac{\beta z_w}{\sqrt{\alpha}}) - kelbe_1(\frac{\beta z_w}{\sqrt{\alpha}})kelke_1(\frac{z_w}{\sqrt{\alpha}})]$$

$$D(z_w, \alpha, \beta) = i\frac{\beta z_w}{\sqrt{\alpha}} e^{\frac{i\pi}{4}} [\text{kelbe}_0(\frac{z_w}{\sqrt{\alpha}})\text{kelke}_1(\frac{\beta z_w}{\sqrt{\alpha}}) - \text{kelbe}_1(\frac{\beta z_w}{\sqrt{\alpha}})\text{kelke}_0(\frac{z_w}{\sqrt{\alpha}})]$$

en précisant que, dans les équations données ci-dessus,

$\text{kelke}_n(x) = \text{ker}_n(x) + i\,\text{kei}_n(x)$ et $\text{kelbe}_n(x) = \text{ber}_n(x) + i\,\text{bei}_n(x)$ où i est le nombre unité imaginaire dans la théorie mathématique des nombres complexes, et $\text{ker}_n$, $\text{kei}_n$, $\text{ber}_n$, $\text{bei}_n$ sont les fonctions de Kelvin ; $\alpha = \dfrac{k_s}{k}$ est la perméabilité a-dimensionnelle de la zone endommagée, $k_s$ représentant la perméabilité de la zone endommagée et k représentant la perméabilité de la couche productrice ; $\beta = \dfrac{r_s}{r_w}$ est le rayon a-dimensionnel de la zone endommagée, $r_s$ représentant le rayon de la zone endommagée et $r_w$ représentant le rayon du puits ; $z_w = r_w\sqrt{\dfrac{\omega}{\delta}}$ où $\omega$ est la pulsation de la fonction sinusoïdale et $\delta$ est la diffusivité de la couche productrice égale à $\dfrac{k}{\varphi\mu c_t}$, $\varphi$ représentant la porosité de la couche productrice, $\mu$ représentant la viscosité du fluide et $c_t$ représentant la compressibilité totale du fluide ;

$$R_0 = \frac{K_0(\sqrt{i}\,z_w)}{\sqrt{i}\,z_w K_1(\sqrt{i}\,z_w)}$$

où $K_0$ et $K_1$ sont les fonctions de Hankel modifiées ; avec aussi $z_f = x_f\sqrt{\dfrac{\omega}{\delta}}$ où $x_f$ est la longueur d'une aile de fracture supposée en compter deux ; $F_{CD}$ est la conductivité a-dimensionnelle de la fracture représentée par la formule $\dfrac{k_f W}{k x_f}$, $k_f$ représentant la perméabilité du matériau de soutènement de la fracture et W représentant l'épaisseur moyenne de la fracture soutenue ; $E_{fD} = \dfrac{k_f \varphi c_t}{k \varphi_f c_{tf}}$ est la diffusivité a-dimensionnelle de la fracture, $\varphi_f$ représentant la porosité du matériau de soutènement remplissant la fracture et $c_{tf}$ représentant la compressibilité totale du fluide dans la fracture ; $S_{wf}$ est un skin éventuel existant entre le fond du puits et l'entrée de la fracture, le procédé étant mis en œuvre au moyen d'un dispositif comportant un ensemble comprenant un obturateur commandable apte à moduler, par une fonction sinusoïdale, le débit de fluide dans le puits, un débitmètre et un capteur de pression aptes à mesurer les variations de débit et de pression du fluide, ces éléments étant associés les uns aux autres de façon que, lorsqu'ils sont descendus dans le puits, le débitmètre et le capteur de pression soient situés en dessous de l'obturateur commandable ledit capteur de pression comportant une enveloppe rigide, deux première et seconde parois d'extrémités pour délimiter, dans ladite enveloppe, un volume fermé principal, une membrane souple et élastique disposée à l'intérieur du volume principal pour délimiter, dans celui-ci, deux premier et second volumes secondaires, deux premier et second orifices réalisés respectivement dans les deux première et seconde parois d'extrémités de façon à mettre en communication respectivement les deux premier et second volumes secondaires avec un milieu extérieur, une valve commandable pour commander le passage d'un fluide à travers le premier orifice, et des moyens pour mesurer les déformations de ladite membrane, l'obturateur commandable étant constitué par une turbine pilotée de façon à pouvoir accélérer cycliquement le débit du fluide dans le puits à l'extraction, entre deux valeurs toutes deux supérieures à la valeur nominale du débit du fluide dans le puits.

La présente invention a aussi pour objet un dispositif permettant de mettre en œuvre le procédé défini ci-dessus.

D'autres caractéristiques et avantages de la présente invention apparaîtront au cours de la description suivante donnée en regard des dessins annexés à titre illustratif, mais nullement limitatif, dans lesquels :

La figure 1 représente, sous forme schématique, un puits comportant deux types d'endommagement : un colmatage présentant un "SKIN" positif et une épaisseur non nulle, et une fracture "F" présentant un "SKIN" négatif,

La figure 2 représente, sous forme schématique, un mode de réalisation d'un dispositif permettant de mettre en œuvre le procédé selon l'invention,

La figure 3 représente un mode de réalisation particulier de l'un des éléments du dispositif selon la figure 2, en l'occurrence le capteur de pression, et

Les figures 4 et 5 représentent deux modes de réalisation particuliers d'un autre des éléments du dispositif selon la figure 2, en l'occurrence les moyens pour moduler le débit du fluide au fond du puits.

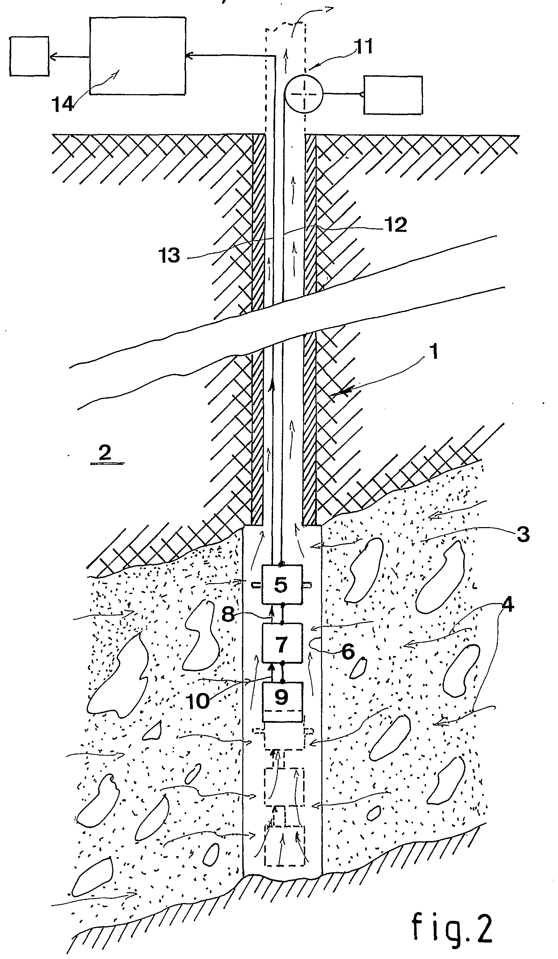

La figure 2 représente, vu en coupe schématique, un puits de pétrole 1 creusé dans un sol 2 jusqu'aux couches productrices 3 enfermant le pétrole. D'une façon générale, ces couches sont formées de roches ou sables perméables et sont situées en dessous de couches imperméables. Le pétrole est ainsi confiné dans ces couches perméables et peut être extrait à condition que le puits pénètre jusqu'à elles.

Quand ces couches perméables sont atteintes, le pétrole éventuellement mélangé à d'autres fluides 4 peut s'écouler vers le puits 1 par décompression et jaillir hors de la tête du puits, ou être remonté vers la surface par pompage si la pression n'est pas suffisante.

Il est ainsi évident que l'un des paramètres définissant la qualité de production d'un puits est la valeur de la perméabilité des couches dans lesquelles se trouve confiné le pétrole.

Un puits idéal est celui dont la qualité correspond exactement à celle définie par son index de productivité défini ci-dessus, mais un tel cas est théorique et ne se trouve que très rarement.

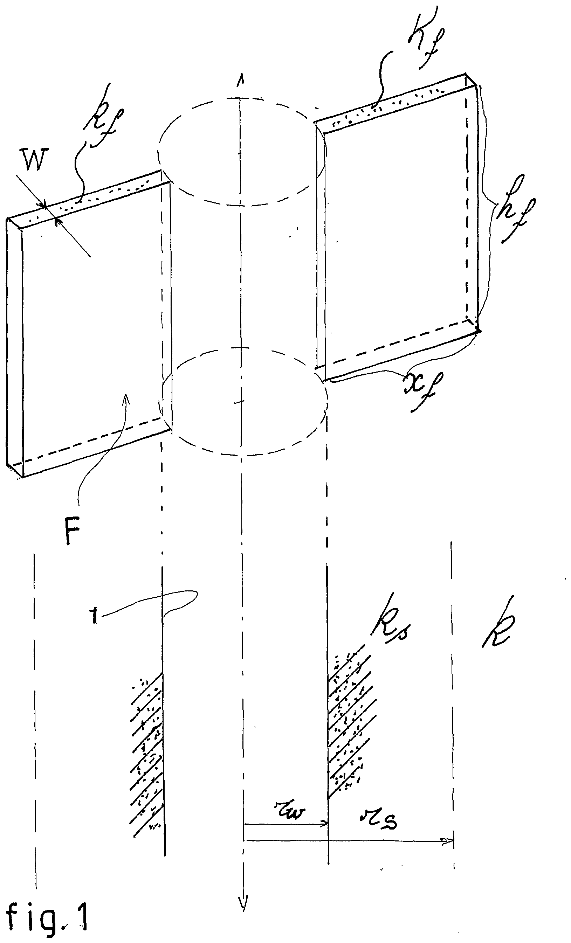

En revanche, nombre de puits, comme le puits 1 schématiquement représenté sur le figure 1, comportent différents types d'endommagement. Le type d'endommagement schématiquement représenté dans la partie inférieure de la figure 1, constitué par un colmatage, présente un "SKIN" S positif d'une épaisseur non nulle, tandis que celui qui est schématiquement représenté dans la partie supérieure de la figure 1, constitué par une fracture "F", présente un "SKIN" S négatif.

Pour mettre en oeuvre le procédé selon l'invention, comme décrit ci-après, on utilise un dispositif qui est très schématiquement illustré sur la figure 2, et qui comporte notamment :

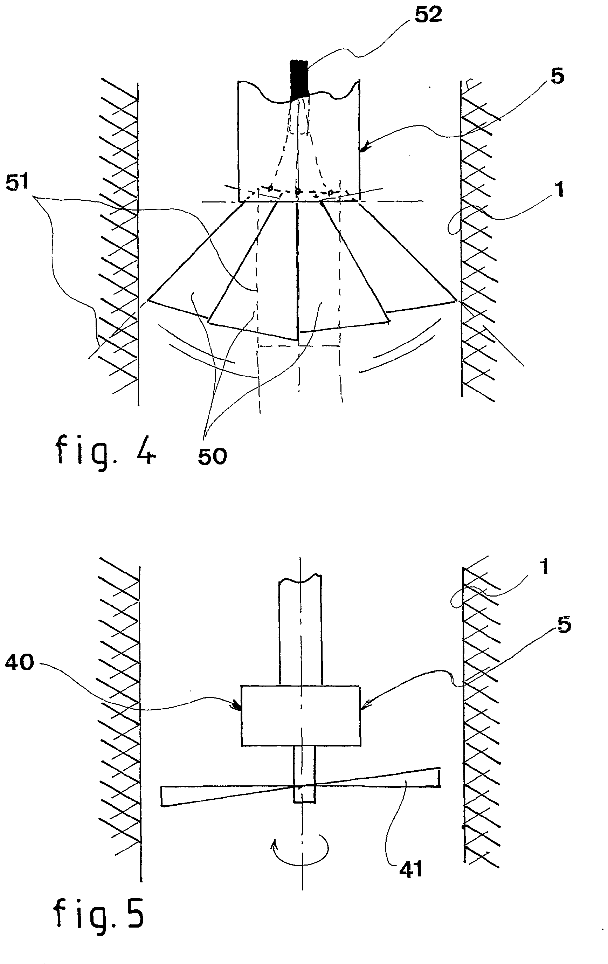

- un obturateur commandable 5 permettant de moduler la valeur de la section de passage du conduit 6 qui forme le puits au niveau des couches pétrolifères 3. Cet obturateur commandable peut par exemple être constitué par un manchon comportant des ailettes pouvant être déployées au moyen d'un moteur à partir d'un point éloigné. Il peut aussi être constitué par une pluralité de parois 50 agencées les unes avec les autres pour former un cône 51 à angle variable, comme par exemple celui qui est illustré sur la figure 4, le coulissement des parois 50 les unes par rapport aux autres pouvant être commandé au moyen d'un câble tracteur 52.

Avantageusement, cet obturateur commandable 5 peut être constitué par une enceinte à paroi déformable dont l'intérieur est alimenté en fluide au moyen d'une pompe le reliant à une réserve de fluide. En commandant la pompe dans un sens ou dans l'autre, on peut commander le gonflement ou le dégonflement de l'enceinte pour obtenir une modulation de la section de passage du conduit dans lequel elle est disposée.

Selon l'invention l'obturateur commandable 5 est constitué, comme schématiquement illustré sur la figure 5, par une turbine 40 ou analogue comportant par exemple une hélice 41 ou analogue pilotée par un moteur, de façon à pouvoir accélérer cycliquement le débit du puits à l'extraction comme explicité ci-après. Ce mode de réalisation présente un avantage dans le cas d'un puits débitant de façon notable. En effet, en modulant le débit entre deux valeurs toutes deux supérieures à la valeur nominale du débit du fluide, la réaction de la turbine tend à maintenir tout l'ensemble de l'outil comportant l'obturateur commandable et les deux autres éléments 7 et 9 définis ci-après, dans le puits au niveau où doit être effectuée la mesure, évitant ainsi que le fluide en circulation n'entraîne l'outil dans un mouvement ascensionnel involontaire et permettant de ce fait de prévoir des moyens d'accrochage avec la paroi du puits moins importants que dans le cas des autres réalisations. En effet, il arrive que le débit de production du pétrole dans un puits soit assez élevé pour qu'il se produise une différence de pression de part et d'autre de l'obturateur commandable telle que cet obturateur ait tendance à être entraîné dans le même mouvement d'ascension que le pétrole. Ce phénomène est un inconvénient pour la précision et la fiabilité des mesures. Pour éliminer ce risque, le dispositif comporte avantageusement des moyens commandables pour solidariser l'obturateur commandable 5 avec la paroi du puits de façon à le maintenir en place au niveau souhaité. Ces moyens commandables peuvent être de toute nature, par exemple constitués de pattes de faible épaisseur dont le déploiement peut être commandé par moteur ou câble pour qu'elles viennent s'ancrer dans la paroi du puits, au niveau souhaité.

- un débitmètre 7 pour mesurer le débit du fluide qui s'écoule dans le conduit 6. Un tel débitmètre est connu en lui-même et peut être constitué schématiquement par un manchon dans lequel est disposé un mesureur comportant une hélice, ou moulinet selon la terminologie des techniciens, et des moyens pour comptabiliser le nombre de tours de cette hélice par unité de temps, à ce manchon pouvant être éventuellement associé un déflecteur afin de capter l'ensemble du fluide s'écoulant dans le conduit 6 et le forcer à passer entièrement dans le manchon. Le débitmètre 7 est agencé pour délivrer à sa sortie 8 un signal représentatif du débit du fluide qui le traverse.
- un capteur de pression 9 bien connu en lui-même, constitué par exemple à partir de jauges de déformation à base par exemple d'un cristal minéral tel que du quartz ou du saphir, ou analogue. Il est apte à délivrer à sa sortie 10 un signal représentatif de la pression du fluide dans le conduit 6.

Pour mettre en oeuvre le procédé selon l'invention, ces trois éléments sont assemblés les uns avec les autres de façon qu'ils puissent être descendus à partir de la tête de puits 11 par tout moyen de liaison, par exemple un câble 12 ou analogue, jusqu'au niveau des couches productrices 3. Ils sont en outre associés de façon que, lorsqu'ils sont descendus dans le puits comme représenté sur la figure 2, le débitmètre 7 et le capteur de pression 9 soient situés en dessous de l'obturateur commandable 5. De plus, ces trois éléments sont reliés par une ligne bus 13 qui permet, à partir d'un organe de traitement 14, de commander l'obturateur 5, éventuellement la mise en marche du débitmètre 7 et du capteur de pression 9, mais aussi de recevoir et traiter les signaux émis par ces deux derniers éléments.

Il est précisé que, en plus de ces trois éléments définis ci-dessus, il est prévu, pour obtenir l'acquisition des données, une horloge qui détermine un temps unique auquel se référeront les mesures de débit et de pression du fluide et qui permet de déterminer les phases des mesures $\psi_q$ et $\psi_\rho$ qui seront définies ci-après.

L'outil 5-7-9 décrit ci-dessus ayant été descendu dans le puits 1, à un niveau déterminé de la couche productrice, le procédé consiste tout d'abord à commander l'obturateur 5 pour faire varier la section de passage du conduit 6 entre deux valeurs minimale et maximale suivant une loi mathématique sinusoïdale de pulsation $\omega$, la valeur minimale n'étant pas nulle afin de ne jamais obturer complètement le conduit 6 et de permettre au fluide de continuer à s'écouler pendant tout le temps des mesures.

Dans le cas où le débitmètre 7 et le capteur de pression 9 ne sont pas en état de marche permanent, ils sont mis en marche pendant quelques périodes de la fonction mathématique de la commande de l'obturateur. Ils délivrent à leur sortie des signaux respectivement représentatifs des variations de débit et de pression du fluide dans le puits en dessous de l'obturateur 5, mais au niveau de l'emplacement des deux autres éléments.

On constate que les courbes de ces variations sont des fonctions sinusoïdales de même période T que celle de la commande de l'obturateur 5, mais déphasées l'une par rapport à l'autre. La mesure conjointe du déphasage entre ces deux signaux et du rapport de leur amplitude respective permet de déduire simultanément une valeur qui est représentative de la perméabilité des couches productrices en dessous de l'obturateur commandable qui se trouvent situées entre le niveau du débitmètre et le fond du puits ainsi qu'une valeur qui est représentative du colmatage.

Ce procédé est intéressant à double titre car, outre qu'il permet d'évaluer la perméabilité et le colmatage au sein même des couches pétrolifères, et donc d'éliminer nombre d'incertitudes inhérentes aux procédés selon l'art antérieur, il permet en plus d'évaluer cette perméabilité et le colmatage à tous les niveaux d'une couche productrice, étant rappelé que, par colmatage, on entend le phénomène qui freine l'écoulement du pétrole et qui présente un SKIN S positif (une image de la résistance à l'écoulement). En revanche on entend par "fracture" comme illustré sur la figure 1, le moyen qui favorise la productivité du puits, en présentant un SKIN S négatif (une image de la moindre résistance à l'écoulement du fluide).

Il est cependant précisé qu'un SKIN négatif modéré (typiquement : -2 < S < 0) ne traduit pas nécessairement la présence d'une fissure ou d'une fracture mais peut simplement être le résultat d'une amélioration locale, naturelle ou induite par acidification, de la perméabilité autour du puits.

Pour la mise en oeuvre du procédé, l'outil 5-7-9 est descendu au plus profond du puits (en traits interrompus sur la figure 2), puis remonté par paliers en effectuant des mesures à chaque niveau.

Pour la mise en oeuvre du procédé selon l'invention tel qu'il sera explicité ci-après dans le cas d'un puits dans une couche productrice comportant une zone endommagée correspondant à un SKIN positif S, il est nécessaire de définir les paramètres suivants :

$\varphi$ : la porosité de la roche, qui est une variable généralement connue ;
$\mu$ : la viscosité du fluide 4 exprimée en Pa.s, qui est une variable généralement connue ;
$c_t$ : la compressibilité totale du fluide 4 exprimée en $Pa^{-1}$, qui est une variable généralement connue ;

k : la perméabilité de la couche productrice 3 exprimée en $m^2$, qui est une variable à déterminer ou à estimer ;

h : la hauteur de la couche productrice 3 exprimée en m, qui est une variable généralement connue ;

q : le débit sinusoïdal complexe du fluide dans le puits 1; c'est une variable qui est connue puisque imposée et mesurée, comme mentionné auparavant, et qui peut s'exprimer par la formule suivante : $\Delta Q e^{i\Psi_q}$ où $\Delta Q$ est l'amplitude exprimée en $m^3/s$ et $\Psi_q$ est la phase exprimée en radian et comptée relativement au temps de l'horloge du dispositif de mesure ;

p : la pression sinusoïdale complexe du fluide 4 dans le puits 1; c'est une variable qui est connue puisque mesurée, comme mentionné auparavant, et qui peut s'exprimer par la formule suivante : $\Delta P e^{i\Psi_p}$ où $\Delta P$ est l'amplitude exprimée en Pa et $\Psi_p$ est la phase exprimée en radian et comptée relativement au temps de l'horloge du dispositif de mesure ;

$R_S$ : la réponse complexe de la couche productrice 3 qui est donnée par l'expression $\dfrac{p}{q}$ soit $\dfrac{\Delta P}{\Delta Q} e^{-i\Psi}$ où $\dfrac{\Delta P}{\Delta Q}$ représente l'amplitude exprimée en $Pa.s/m^3$, avec $\Psi = \Psi_q - \Psi_p$ qui est le retard de phase exprimé en radian de la pression sur le débit ;

$\omega$ : la pulsation de la fonction sinusoïdale du test cyclique exprimée en $s^{-1}$ qui est connue puisque imposée ; cette pulsation est reliée à la période T du test cyclique exprimée en s par la formule $\dfrac{2\pi}{T}$ ;

i: le nombre unité imaginaire dans la théorie mathématique des nombres complexes;

$r_w$ : le rayon du puits 1 exprimé en m, qui est donc connu ;

$r_S$ : le rayon de la zone endommagée exprimé en m, variable inconnue, l'épaisseur de la zone endommagée étant alors donnée par la valeur $r_{S} - r_w$ ;

$k_S$ : la perméabilité de la zone endommagée exprimée en $m^2$, qui est une variable inconnue ;

$c_t$ : la compressibilité totale du fluide exprimée en $Pa^{-1}$, grandeur connue ;

$\mu$ : la viscosité du fluide exprimée en Pa.s, grandeur connue.

A toutes fins utiles, sont aussi rappelés les paramètres définis au préambule de la présente description, à savoir : IP l'index de productivité du puits exprimé en $m^3.s^{-1}.Pa^{-1}$, soit

$$IP = \frac{2\pi kh}{\mu[\ln(\frac{Re}{rw}) - 0,75 + S]},$$

où $R_e$ est le rayon de drainage du puits exprimé en m.

Des paramètres définis ci-dessus, se déduisent les variables suivantes : $\delta$ : la diffusivité de la couche productrice exprimée en $m^2.s^{-1}$ qui est égale à $\dfrac{k}{\varphi \mu c_t}$ ; $\alpha = \dfrac{k_s}{k}$ : la perméabilité a-dimensionnelle de la zone endommagée, sans dimension; $\beta = \dfrac{r_s}{r_w}$ : le rayon a-dimensionnel de la zone endommagée, sans dimension; $z_w = r_w \sqrt{\dfrac{\omega}{\delta}}$ : une formule sans dimension où la seule variable inconnue est la perméabilité k entrant dans la définition de la diffusivité $\delta$ ;

$R_D$ : la réponse complexe a-dimensionnelle de la couche productrice, qui est donnée par l'expression suivante sans dimension : $\dfrac{2\pi khp}{\mu q}$. $R_0$ : la réponse complexe d'un puits 1 idéal, dans le cas d'un SKIN-S nul, qui est donnée par la valeur :

$$R_0 = \frac{K_0(\sqrt{i}\,z_w)}{\sqrt{i}\,z_w K_1(\sqrt{i}\,z_w)}$$

dans laquelle $K_0$ et $K_1$ sont des fonctions de Hankel modifiées.

La réponse du puits 1 endommagé par un "SKIN" S d'épaisseur nulle est donnée, selon par exemple le brevet US-A-3 559 476, par la formule suivante :

$$R_S(z_w) = R_0(z_w) + S.$$

Cependant, il est évident qu'un SKIN d'épaisseur nulle n'est que théorique. Avec le procédé selon l'invention, il est possible de connaître la réponse d'un puits avec une épaisseur de "SKIN" S non nulle, figure 1, égale à $r_S - r_w$.

En effet, selon l'invention, dans le cas où la couche productrice comporte une zone endommagée présentant un "SKIN" positif d'épaisseur non nulle, la réponse R du puits est obtenue par l'équation :

$$R_C = \frac{DR_0(\beta z_w) - B}{-CR_0(\beta z_w) + A}$$

dans laquelle A, B, C et D, fonctions de $z_w$, $\alpha$, et $\beta$, sont définies par les équations suivantes :

$$A(z_w, \alpha, \beta) = i\frac{z_w}{\sqrt{\alpha}} e^{\frac{i\pi}{4}} [kelbe_0(\frac{\beta z_w}{\sqrt{\alpha}}) kelke_1(\frac{z_w}{\sqrt{\alpha}}) - kelbe_1(\frac{z_w}{\sqrt{\alpha}}) kelke_0(\frac{\beta z_w}{\sqrt{\alpha}})]$$

$$B(z_w, \alpha, \beta) = \frac{1}{\alpha} [kelbe_0(\frac{z_w}{\sqrt{\alpha}}) kelke_0(\frac{\beta z_w}{\sqrt{\alpha}}) - kelbe_0(\frac{\beta z_w}{\sqrt{\alpha}}) kelke_0(\frac{z_w}{\sqrt{\alpha}})]$$

$$C(z_w, \alpha, \beta) = i\beta z_w^2 [kelbe_1(\frac{z_w}{\sqrt{\alpha}}) kelke_1(\frac{\beta z_w}{\sqrt{\alpha}}) - kelbe_1(\frac{\beta z_w}{\sqrt{\alpha}}) kelke_1(\frac{z_w}{\sqrt{\alpha}})]$$

$$D(z_w, \alpha, \beta) = i\frac{\beta z_w}{\sqrt{\alpha}} e^{\frac{i\pi}{4}} [kelbe_0(\frac{z_w}{\sqrt{\alpha}}) kelke_1(\frac{\beta z_w}{\sqrt{\alpha}}) - kelbe_1(\frac{\beta z_w}{\sqrt{\alpha}}) kelke_0(\frac{z_w}{\sqrt{\alpha}})]$$

en précisant en outre que, dans les équations données ci-dessus, $kelke_n(x) = ker_n(x) + i\,kei_n(x)$ et $kelbe_n(x) = ber_n(x) + i\,bei_n(x)$, où i est le nombre imaginaire unité dans la théorie des nombres complexes, $ker_n$, $kei_n$, $ber_n$, $bei_n$ étant, de façon connue dans le domaine, les fonctions de Kelvin.

Il est en outre précisé que l'on passe de $R_C$ à $R_S$, en supposant que selon les deux cas évoqués auparavant du puits colmaté ou ayant une fracture, $k_S \gg k$ ou que $k_S \ll k$ avec par exemple $\alpha = 10^{\pm 3}$ et en remplaçant $\beta$ par

$e^{\frac{S\alpha}{1-\alpha}}$ en faisant en outre la remarque suivante que $S = (\frac{1}{\alpha} - 1)\ln\beta$ avec ln signifiant le logarithme népérien.

Il est donc possible, en effectuant plusieurs mesures, avec des périodes T différentes, d'inverser les résultats pour déterminer $z_w$, $\alpha$ et $\beta$ puisque chaque essai fournit une paire indépendante de relations indépendantes.

En théorie, il suffirait de deux mesures correspondant à deux périodes différentes pour déterminer $z_w$, $\alpha$ et $\beta$, desquels on déduit la perméabilité intacte k, la perméabilité dégradée $k_S$ et la profondeur de l'endommagement $r_S$. Plus simplement, une seule mesure suffit pour déterminer S et $z_w$ d'où l'on déduit la perméabilité intacte k dans le cas où l'on souscrit à l'hypothèse de l'endommagement d'épaisseur négligeable.

En revanche, dans le cas où la couche productrice comporte une fracture F présentant un "SKIN" négatif, figure 1, la réponse Rf du puits est obtenue par l'équation :

$$R_f = \frac{\pi}{F_{CD}\sqrt{\dfrac{i z_f^2}{E_{fD}} + \dfrac{2\sqrt{i}\, z_f}{F_{CD}}}} + S_{wf}$$

dans laquelle $z_f = x_f \sqrt{\dfrac{\omega}{\delta}}$ est un paramètre sans dimension où figurent les grandeurs inconnues $x_f$ et k par l'intermédiaire de la diffusivité $\delta$, $F_{CD}$ est la conductivité a-dimensionnelle de la fracture F, nombre sans dimension, qui est définie par : $\dfrac{k_f w}{k x_f}$, $E_{fD} = \dfrac{k_f \varphi c_t}{k \varphi_f c_{tf}}$ est la diffusivité a-dimensionnelle de la fracture, nombre sans dimension, qui est le rapport entre la diffusivité du fluide dans la fracture et la diffusivité du fluide dans le gisement, $S_{wf}$ est un "SKIN" éventuel engendré par n'importe quel type de perte de conductivité existant entre le fond du puits et l'entrée de la fracture, avec :

$k_f$ : la perméabilité du matériau de soutènement de la fracture prise perpendiculairement à l'axe du puits, exprimée $m^2$, grandeur inconnue ;

w : l'épaisseur moyenne de la fracture, exprimée en m, grandeur inconnue ;

$k_f w$ : la conductivité de la fracture, exprimée $m^3$, grandeur dérivée inconnue ;

$x_f$ : la longueur d'une aile de la fracture supposée en compter deux, exprimée en m, grandeur inconnue ;

k : la perméabilité de la couche productrice déjà définie ci-avant, exprimée en $m^2$, grandeur inconnue ;

$\varphi$ : la porosité de la couche productrice, grandeur connue ;

$\varphi_f$ : porosité du matériau de soutènement remplissant la fracture, grandeur connue ;

$c_t$ : compressibilité totale du fluide dans la couche productrice définie ci-avant, exprimée en $Pa^{-1}$, grandeur connue ;

$c_{tf}$ : compressibilité totale du fluide dans la fracture égale à la compressibilité du fluide augmentée de celle du matériau de soutènement, grandeur connue ;

En effectuant au moins deux tests cycliques pour deux périodes T différentes, on obtient quatre relations indépendantes entre les paramètres a-dimensionnels $z_f$, $F_{CD}$, $E_{fD}$, $S_{wf}$ qui, jointes à la donnée du volume de matériau de soutènement remplissant la fracture qui est une grandeur connue parce qu'on en a mesuré la masse injectée au moment de sa mise place par fracturation hydraulique et qui donc fournit la valeur du produit $w.x_f$, puisque en outre la hauteur de la fracture est connue, permettent de déterminer les cinq grandeurs inconnues : $x_f$, w, $k_f$, k et $S_{wf}$.

On peut d'ailleurs s'affranchir de la donnée du volume de la fracture soutenue en effectuant au moins trois tests avec trois périodes différentes pour obtenir au moins six relations entre les cinq variables inconnues à déterminer.

Le procédé peut être facilement mis en œuvre avec le dispositif tel que celui qui est illustré schématiquement sur le figure 2 et défini de façon générale ci-dessus.

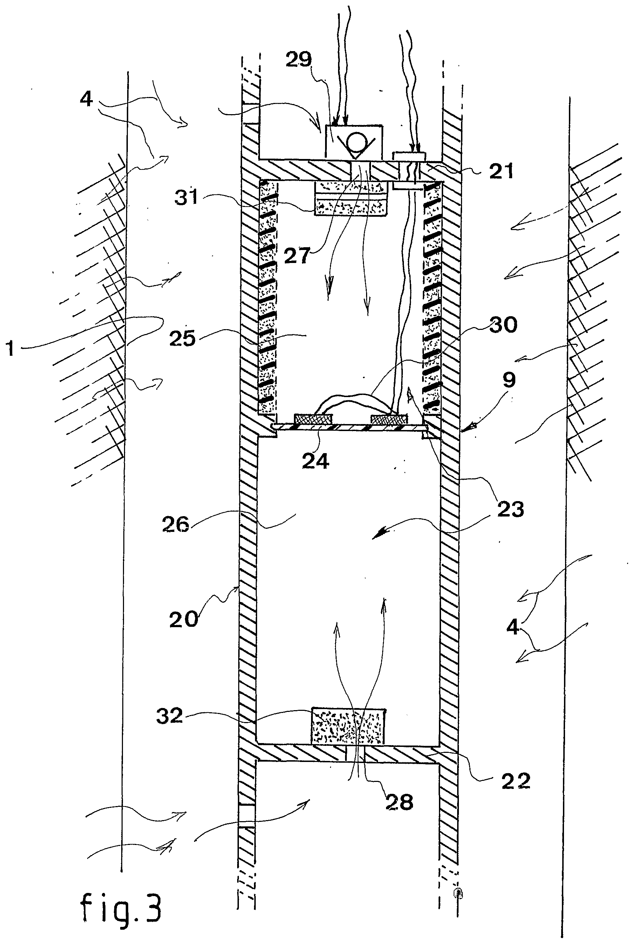

Cependant, étant donné que l'amplitude des variations de pression du fluide au fond du puits est relativement faible par rapport à la pression qui y règne généralement, il est avantageux que le capteur de pression schématiquement illustré et référencé en 9 sur la figure 2 présente une structure comme celle qui est illustrée sur la figure 3.

Dans le mode de réalisation selon la figure 3, le capteur de pression 9 comporte une enveloppe rigide 20 constituée par exemple par une paroi cylindrique. A cette enveloppe rigide sont associées deux première et seconde parois d'extrémités 21, 22 pour délimiter, avec elle, un volume fermé principal 23, et une membrane souple et élastique 24 à l'intérieur du volume principal 23 pour délimiter, dans celui-ci, deux premier et second volumes secondaires 25, 26 séparés l'un de l'autre de façon étanche par cette membrane 24.

Le capteur de pression 9 comporte en outre deux orifices 27, 28 réalisés dans les deux parois d'extrémités 21, 22 de façon à mettre en communication respectivement les deux volumes secondaires 25, 26 avec le milieu extérieur, notamment l'intérieur du puits quand le capteur de pression est descendu dans celui-ci.

Il comporte en outre une valve commandable 29, par exemple une électrovanne ou analogue, associée à l'orifice 27 pour commander le passage d'un fluide à travers cet orifice 27 réalisé dans la première paroi d'extrémité 21 définie ci-dessus.

A la membrane 24 sont associés des moyens 30 pour mesurer les éventuelles déformations qui lui seront appliquées comme explicité ci-après. Dans une réalisation avantageuse, ces moyens 30 sont constitués par des jauges de déformation pour mesurer les contraintes qui sont appliquées à la membrane 24, ces jauges étant, de façon connue, positionnées contre la surface de la membrane 24.

Avantageusement, le capteur de pression 9 comporte en outre des filtres 31, 32 associés aux orifices 27, 28 pour filtrer le fluide apte à remplir les deux volumes secondaires 25, 26.

Ce mode de réalisation pour le capteur de pression 9 est particulièrement avantageux notamment dans le cas de la mise en oeuvre du procédé décrit ci-dessus.

En effet, avec ce mode de réalisation, il est possible de réaliser une membrane 24 de très faible épaisseur et donc d'obtenir un capteur de pression ayant une grande sensibilité malgré les fortes pressions qui peuvent régner au fond du puits 1.

Ce capteur de pression 9 s'utilise de la façon suivante.

Comme mentionné ci-avant, il est descendu avec les autres éléments 5 et 7 au fond du puits 1, la valve commandable 29 étant dans la position ouverte. De cette façon, le fluide qui se trouve au fond du puits à forte pression remplit les deux volumes secondaires 25, 26 qui se trouvent donc à la même pression, celle régnant au fond du puits. Les deux pressions qui s'appliquent de part et d'autre de la membrane 24 sont égales et la membrane peut supporter, malgré sa faible épaisseur, des pressions très élevées.

Quand le procédé est mis en œuvre et que le débit du fluide dans le puits est modulé, la valve commandable 29 est amenée dans sa position fermée. Du fait de la modulation du débit du fluide, les variations de pression de ce fluide s'appliquent dans le second volume secondaire 26 et donc sur la face de la membrane 24 tournée vers ce second volume secondaire. Ces variations de pression s'effectuent autour de la valeur nominale de la pression régnant au fond du puits et leurs amplitudes sont relativement faibles. Comme la différence de pression qui s'applique de part et d'autre de la membrane 24 est relativement faible, on peut donner à cette membrane une très faible épaisseur, ce qui permet d'obtenir un capteur de pression 9 très sensible.

Cette sensibilité est encore améliorée en donnant au premier volume secondaire une valeur relativement importante déterminée de façon à utiliser la compressibilité du fluide, même si elle est faible, pour absorber la variation de ce premier volume secondaire. Quand il existera une différence de pression entre les deux volumes secondaires 25, 26, la membrane 24 pourra donc se déformer en réduisant ou augmentant le premier volume secondaire 25.

Avec cette réalisation, la pression régnant dans premier volume secondaire 25 est une pression de référence de valeur relativement constante du même ordre de grandeur que celle de la pression du fluide 4 à mesurer quel que soit le niveau du puits où la mesure est effectuée.

## Revendications

**1.** Procédé pour déterminer la qualité de réserve d'un puits de pétrole ou analogue débitant un fluide donné provenant d'une couche productrice, par la mesure de la réponse (R) du puits, ledit procédé consistant à moduler, par une fonction sinusoïdale, le débit du fluide dans le puits, et à mesurer les variations de débit et de pression du fluide, la qualité de réserve étant essentiellement représentée par l'index de productivité du puits, le procédé étant **caractérisé par le fait que**

- (I) la réponse (Rc) du puits, dans le cas où la couche productrice comporte une zone endommagée présentant un "SKIN" positif d'épaisseur non nulle, est obtenue par l'équation : $Rc = \dfrac{D_{R_0}(\beta Z_w) - B}{-C_{R_0}(\beta Z_w) + A'}$ et que

- (II) la réponse (Rf) du puits, dans le cas où la couche productrice comporte une fracture présentant un "SKIN" négatif, est obtenue par l'équation :

$$Rf = \dfrac{\pi}{F_{CD}\sqrt{\dfrac{iZ\,f^2}{E_{fD}} + \dfrac{2\sqrt{i}Zf}{F_{CD}}}} Z + S_{wf}$$

équations dans lesquelles :

A, B, C et D sont des fonctions des paramètres $Z_w$, $\alpha$ et $\beta$ définis ci-après, et sont respectivement définies par les quatre équations ci-dessous :

$$A(z_w,\alpha,\beta)=i\frac{z_w}{\sqrt{\alpha}}e^{\frac{i\pi}{4}}[kelbe_0(\frac{\beta z_w}{\sqrt{\alpha}})kelke_1(\frac{z_w}{\sqrt{\alpha}})-kelbe_1(\frac{z_w}{\sqrt{\alpha}})kelke_0(\frac{\beta z_w}{\sqrt{\alpha}})]$$

$$B(z_w,\alpha,\beta)=\frac{1}{\alpha}[kelbe_0(\frac{z_w}{\sqrt{\alpha}})kelke_0(\frac{\beta z_w}{\sqrt{\alpha}})-kelbe_0(\frac{\beta z_w}{\sqrt{\alpha}})kelke_0(\frac{z_w}{\sqrt{\alpha}})]$$

$$C(z_w,\alpha,\beta)=i\beta z_w^2[kelbe_1(\frac{z_w}{\sqrt{\alpha}})kelke_1(\frac{\beta z_w}{\sqrt{\alpha}})-kelbe_1(\frac{\beta z_w}{\sqrt{\alpha}})kelke_1(\frac{z_w}{\sqrt{\alpha}})]$$

$$D(z_w,\alpha,\beta)=i\frac{\beta z_w}{\sqrt{\alpha}}e^{\frac{i\pi}{4}}[kelbe_0(\frac{z_w}{\sqrt{\alpha}})kelke_1(\frac{\beta z_w}{\sqrt{\alpha}})-kelbe_1(\frac{\beta z_w}{\sqrt{\alpha}})kelke_0(\frac{z_w}{\sqrt{\alpha}})]$$

en précisant que, dans les équations données ci-dessus,

$kelbe_n(x)=ker_n(x)+i\,kei_n(x)$ et $kelbe_n(x)=ber_n(x)+i\,bei_n(x)$ où i est le nombre unité imaginaire dans la théorie mathématique des nombres complexes, et $ker_n$, $kei_n$, $ber_n$, $bei_n$ sont les fonctions de Kelvin $\alpha=\frac{k_s}{k}$, est la perméabilité a-dimensionnelle de la zone endommagée, $k_s$ représentant la perméabilité de la zone endommagée et k représentant la perméabilité de la couche productrice ; $\beta=\frac{r_s}{r_w}$ est le rayon a-dimensionnel de la zone endommagée, $r_S$ représentant le rayon de la zone endommagée et $r_w$ représentant le rayon du puits ; $z_w=r_w\sqrt{\frac{\omega}{\delta}}$ où $\omega$ est la pulsation de la fonction sinusoïdale et $\delta$ est la diffusivité de la couche productrice égale à $\frac{k}{\varphi\mu c_t}$, $\varphi$ représentant la porosité de la couche productrice, $\mu$ représentant la viscosité du fluide et Ct représentant la compressibilité totale du fluide ; $R_0=\frac{K_0(\sqrt{iZ_w})}{\sqrt{iZ_w}k_1(\sqrt{iZ_w})}$ où $K_0$ et $K_1$ sont les fonctions de Hankel modifiées ; avec aussi $Z_wf=x_f\sqrt{\frac{\omega}{\delta}}$ où $x_f$ est la longueur d'une aile de fracture supposée en compter deux ; $F_{CD}$ est la conductivité a-dimensionnelle de la fracture représentée par la formule $\frac{k_f W}{kX_f}$, $k_f$ représentant la perméabilité du matériau de soutènement de la fracture et w représentant l'épaisseur moyenne de la fracture soutenue ; $E_{fD}=\frac{k_f\varphi C_t}{k\varphi_f C_{tf}}$ est la diffusivité a-dimensionnelle de la fracture, $\varphi_f$ représentant la porosité du matériau de soutènement remplissant la fracture et $C_{tf}$ représentant la compressibilité totale du fluide dans la fracture ; $S_{wf}$ est un skin éventuel existant entre le fond du puits et l'entrée de la fracture,

le procédé étant mis en œuvre au moyen d'un dispositif comportant un ensemble comprenant un obturateur commandable (5) apte à moduler, par une fonction sinusoïdale, le débit de fluide dans le puits, un débitmètre (7) et un capteur de pression (9) aptes à mesurer les variations de débit et de pression du fluide, ces éléments étant associés les uns aux autres de façon que, lorsqu'ils sont descendus dans le puits, le débitmètre et le capteur de pression soient situés en dessous de l'obturateur commandable ledit capteur de pression (9) comportant une enveloppe rigide (20), deux première et seconde parois d'extrémités (21,22) pour délimiter, dans ladite enveloppe, un volume fermé principal (23), une membrane souple et élastique (24) disposée à l'intérieur du volume principal (23) pour délimiter, dans celui-ci, deux premier et second volumes secondaires (25, 26), deux premier et second orifices (27,28) réalisés respectivement dans les deux première et seconde parois d'extrémités (21, 22) de façon à mettre en communication respectivement les deux premier et second volumes secondaires (25, 26) avec un milieu extérieur, une valve commandable (29) pour commander le passage d'un fluide à travers le premier orifice (27), et des moyens (30) pour mesurer les déformations de ladite membrane (24), l'obturateur commandable (5) étant constitué par une turbine (40) pilotée de façon à pouvoir accélérer cycliquement le débit du fluide dans le puits à l'extraction, entre deux valeurs toutes deux supérieures à la valeur nominale du débit du fluide dans le puits.

2. Procédé selon la revendication 1, **caractérisé par le fait que** la modulation du débit du fluide dans le puits est effectuée par une accélération du débit entre deux valeurs, toutes deux supérieures à la valeur nominale du débit du fluide dans le puits.

3. Dispositif permettant de mettre en œuvre le procédé selon l'une des revendications précédentes 1 et 2, **caractérisé par le fait qu'**il comporte un ensemble comprenant un obturateur commandable (5) apte à moduler, par une fonction sinusoïdale, le débit de fluide dans le puits, un débitmètre (7) et un capteur de pression (9) aptes à mesurer les variations de débit et de pression du fluide, ces éléments étant associés les uns aux autres de façon que, lorsqu'ils sont descendus dans le puits, le débitmètre et le capteur de pression soient situés en dessous de l'obturateur commandable ledit capteur de pression (9) comportant une enveloppe rigide (20), deux première et seconde parois d'extrémités (21,22) pour délimiter, dans ladite enveloppe, un volume fermé principal (23), une membrane souple et élastique (24) disposée à l'intérieur du volume principal 23 pour délimiter, dans celui-ci, deux premier et second volumes secondaires (25, 26), deux premier et second orifices (27,28) réalisés respectivement dans les deux première et seconde parois d'extrémités (21, 22) de façon à mettre en communication respectivement les deux premier et second volumes secondaires (25, 26) avec un milieu extérieur, une valve commandable (29) pour commander le passage d'un fluide à travers le premier orifice (27), et des moyens (30) pour mesurer les déformations de ladite membrane (24), l'obturateur commandable (5) étant constitué par une turbine (40) pilotée de façon à pouvoir accélérer cycliquement le débit du fluide dans le puits à l'extraction, entre deux valeurs toutes deux supérieures à la valeur nominale du débit du fluide dans le puits.

4. Dispositif selon la revendication 3, **caractérisé par le fait que** les moyens (30) pour mesurer les déformations de ladite membrane (24) sont constitués par des jauges de déformation.

5. Dispositif selon l'une des revendications 3 et 4, **caractérisé par le fait que** ledit capteur de pression (9) comporte en outre des filtres (31,32) associés aux deux premier et second orifices (27,28).

**Patentansprüche**

1. Verfahren zur Bestimmung der Qualität der Reserven einer Ölformation oder dergleichen, die ein gegebenes Fluid aus einer Förderschicht abgibt, durch Messen der Reaktion (R) der Formation, wobei das Verfahren das Modulieren der Durchflussmenge des Fluids in der Formation mittels einer sinusförmigen Funktion und das Messen von Änderungen der Durchflussmenge und des Drucks des Fluids umfasst, wobei die Qualität der Reserven im Wesentlichen durch den Produktivitätsindex der Formation repräsentiert wird, wobei der Prozess **dadurch gekennzeichnet ist, dass**

- (I) die Reaktion (Rc) der Formation, falls die Förderschicht eine beschädigte Zone mit einem positiven "SKIN" mit einer Dicke ungleich Null aufweist, durch folgende Gleichung erhalten wird: $Rc = \dfrac{D_{R_0}(\beta Z_w) - B}{-C_{R_0}(\beta Z_w) + A'}$ und dass

- (II) die Reaktion (Rf) der Formation, falls die Förderschicht einen Bruch mit einem negativen "SKIN" aufweist, durch folgende Gleichung erhalten wird:

$$Rf = \dfrac{\pi}{F_{CD}\sqrt{\dfrac{iZ\,f^2}{E_{fD}} + \dfrac{2\sqrt{iZf}}{F_{CD}}}} \cdot Z + S_{wf}$$

wobei in den Gleichungen:

A, B, C und D Funktionen der unten definierten Parameter $Z_w$, $\alpha$ und $\beta$ sind und jeweils durch die vier folgenden Gleichungen definiert sind:

$$A(z_w,\alpha,\beta)=i\frac{z_w}{\sqrt{\alpha}}e^{\frac{i\pi}{4}}[kelbe_0(\frac{\beta z_w}{\sqrt{\alpha}})kelke_1(\frac{z_w}{\sqrt{\alpha}})-kelbe_1(\frac{z_w}{\sqrt{\alpha}})kelke_0(\frac{\beta z_w}{\sqrt{\alpha}})]$$

$$B(z_w,\alpha,\beta)=\frac{1}{\alpha}[kelbe_0(\frac{z_w}{\sqrt{\alpha}})kelke_0(\frac{\beta z_w}{\sqrt{\alpha}})-kelbe_0(\frac{\beta z_w}{\sqrt{\alpha}})kelke_0(\frac{z_w}{\sqrt{\alpha}})]$$

$$C(z_w,\alpha,\beta)=i\beta z_w^2[kelbe_1(\frac{z_w}{\sqrt{\alpha}})kelke_1(\frac{\beta z_w}{\sqrt{\alpha}})-kelbe_1(\frac{\beta z_w}{\sqrt{\alpha}})kelke_1(\frac{z_w}{\sqrt{\alpha}})]$$

$$D(z_w,\alpha,\beta)=i\frac{\beta z_w}{\sqrt{\alpha}}e^{\frac{i\pi}{4}}[kelbe_0(\frac{z_w}{\sqrt{\alpha}})kelke_1(\frac{\beta z_w}{\sqrt{\alpha}})-kelbe_1(\frac{\beta z_w}{\sqrt{\alpha}})kelke_0(\frac{z_w}{\sqrt{\alpha}})]$$

wobei darauf hingewiesen wird, dass in den oben angegebenen Gleichungen

$kelbe_n$ (x) = $ker_n$ (x)+ $i\,kei_n$ (x) und $kelbe_n$ (x) = $ber_n$ (x)+ $i\,bei_n$ (x), wobei i die imaginäre Einheitszahl in der mathematischen Theorie der komplexen Zahlen ist und $ker_n$, $kei_n$, $ber_n$, $bei_n$ die Funktionen von Kelvin sind; $\alpha = \frac{k_s}{k}$ die a-dimensionale Permeabilität des beschädigten Bereichs ist, $k_s$ die Permeabilität des beschädigten Bereichs darstellt und k die Permeabilität der Förderschicht darstellt; $\beta = \frac{r_s}{r_w}$ der a-dimensionale Radius des beschädigten Bereichs ist, $r_s$ den Radius des beschädigten Bereichs darstellt und $r_w$ den Radius der Formation darstellt; $z_w = r_w\sqrt{\frac{\omega}{\delta}}$, wobei $\omega$ die Pulsation der Sinusfunktion ist und $\delta$ die Diffusität der Förderschicht gleich $\frac{k}{\varphi\mu c_t}$ ist, wobei $\varphi$ die Porosität der Förderschicht darstellt, $\mu$ die Viskosität des Fluids darstellt und $C_t$ die gesamte Kompressibilität des Fluids darstellt; $R_0 = \frac{K_0(\sqrt{i}z_w)}{\sqrt{i}z_w k_1(\sqrt{i}z_w)}$ wobei $K_0$ und $K_1$ die modifizierten Hankel-Funktionen sind; auch mit $Z_wf = x_f\sqrt{\frac{\omega}{\delta}}$, wobei $x_f$ die Länge eines Bruchflügels ist, von dem angenommen wird, dass es davon zwei gibt; $F_{CD}$ die a-dimensionale Leitfähigkeit des Bruchs ist, dargestellt durch die Formel $\frac{k_f W}{k X_f}$, wobei $k_f$ die Permeabilität des Trägermaterials des Bruchs darstellt und w die durchschnittliche Dicke des getragenen Bruchs darstellt; $E_{fD} = \frac{k_f\varphi C_t}{k\varphi_f C_{tf}}$ die a-dimensionale Diffusivität des Bruchs ist, wobei $\varphi_f$ die Porosität des den Bruch füllenden Trägermaterials darstellt und $C_{tf}$ die gesamte Kompressibilität des Fluids in dem Bruch darstellt; $S_{wf}$ ein eventuell vorhandener Skin zwischen dem Boden der Formation und dem Eingang des Bruchs ist, wobei das Verfahren mittels einer Vorrichtung ausgeführt wird, die eine Anordnung umfasst, die einen steuerbaren Verschluss (5), der in der Lage ist, die Durchflussmenge des Fluids in der Formation mittels einer sinusförmigen Funktion zu modulieren, einen Durchflussmesser (7) und einen Drucksensor (9) aufweist, der in der Lage ist, Änderungen der Durchflussmenge und des Fluiddrucks zu messen, wobei diese Elemente so miteinander verbunden sind, dass, wenn sie in die Formation abgesenkt werden, der Durchflussmesser und der Drucksensor unterhalb des steuerbaren Verschlusses angeordnet sind, wobei der Drucksensor (9) eine starre Umhüllung (20), zwei erste und zweite Stirnwände (21, 22) zur Begrenzung eines geschlossenen Hauptvolumens (23) in der Umhüllung, eine flexible und elastische Membran (24), die innerhalb des Hauptvolumens (23) angeordnet ist, um darin zwei erste und zweite Sekundärvolumina (25, 26) zu begrenzen, zwei erste und zweite Öffnungen (27, 28), die jeweils in den beiden ersten und zweiten Stirnwänden (21, 22) ausgebildet sind, so dass die beiden ersten und zweiten Sekundärvolumina (25, 26) jeweils mit einem externen Medium kommunizieren, ein steuerbares Ventil (29) zum Steuern der Passage eines Fluids durch die erste Öffnung (27) und Mittel (30) zum Messen der Verformungen der Membran (24) umfasst, wobei der steuerbare Verschluss (5) aus einer Turbine (40) besteht, die so gesteuert wird, dass sie in der Lage ist, die Durchflussmenge des Fluids in der Formation während der Extraktion zwischen zwei Werten zyklisch zu beschleunigen, die beide größer sind als der Nennwert der Durchflussmenge des Fluids in der Formation.

2. Verfahren nach Anspruch 1, **dadurch gekennzeichnet, dass** die Modulation der Durchflussmenge des Fluids in der Formation durch Beschleunigung der Durchflussmenge zwischen zwei Werten erfolgt, die beide größer als der Nennwert der Durchflussmenge des Fluids in der Formation sind.

3. Vorrichtung zum Ausführen des Verfahrens nach einem der vorstehenden Ansprüche 1 und 2, **dadurch gekennzeichnet, dass** sie eine Anordnung mit einem steuerbaren Verschluss (5) umfasst, der in der Lage ist, die Durchflussmenge des Fluids in der Formation mittels einer sinusförmigen Funktion zu modulieren, einen Durchflussmesser (7) und einen Drucksensor (9) aufweist, der in der Lage ist, Änderungen der Durchflussmenge und des Fluiddrucks zu messen, wobei diese Elemente so miteinander verbunden sind, dass, wenn sie in die Formation abgesenkt werden, der Durchflussmesser und der Drucksensor unterhalb des steuerbaren Verschlusses angeordnet sind, wobei der Drucksensor (9) eine starre Umhüllung (20), zwei erste und zweite Stirnwände (21, 22) zur Begrenzung eines geschlossenen Hauptvolumens (23) in der Umhüllung, eine flexible und elastische Membran (24), die innerhalb des Hauptvolumens (23) angeordnet ist, um darin zwei erste und zweite Sekundärvolumina (25, 26) zu begrenzen, zwei erste und zweite Öffnungen (27, 28), die jeweils in den beiden ersten und zweiten Stirnwänden (21, 22) ausgebildet sind, so dass die beiden ersten und zweiten Sekundärvolumina (25, 26) jeweils mit einem externen Medium kommunizieren, ein steuerbares Ventil (29) zum Steuern der Passage eines Fluids durch die erste Öffnung (27) und Mittel (30) zum Messen der Verformungen der Membran (24) umfasst, wobei der steuerbare Verschluss (5) aus einer Turbine (40) besteht, die so gesteuert wird, dass sie in der Lage ist, die Durchflussmenge des Fluids in der Formation während der Extraktion zwischen zwei Werten zyklisch zu beschleunigen, die beide größer sind als der Nennwert der Durchflussmenge des Fluids in der Formation.

4. Vorrichtung nach Anspruch 3, **dadurch gekennzeichnet, dass** die Mittel (30) zum Messen der Verformungen der Membran (24) aus Dehnungsmessstreifen bestehen.

5. Vorrichtung nach einem der Ansprüche 3 und 4, **dadurch gekennzeichnet, dass** der Drucksensor (9) ferner Filter (31, 32) umfasst, die den beiden ersten und zweiten Öffnungen (27, 28) zugeordnet sind.

## Claims

1. A method for determining the quality of an oil-well reserve or analog discharging a given fluid coming from a productive layer, by measuring the response (R) of the well, said method consisting in modulating, through a sinusoidal function, the flow rate of the fluid in the well, and of measuring how the flow rate and pressure of the fluid vary, the quality of the reserve being essentially represented by the well's productivity index, the method being **characterized by the fact that**

- (I) the response (Rc) of the well, for the case where the productive layer includes a damaged zone having a positive "SKIN" of non-zero thickness, is obtained by the equation: $Rc = \dfrac{D_{R_0}(\beta Z_w) - B}{-C_{R_0}(\beta Z_w) + A'}$ and that
- (II) the response (Rf) of the well, for the case where the productive layer includes a fracture having a negative "SKIN," is obtained by the equation:

$$Rf = \cfrac{\pi}{F_{CD}\sqrt{\dfrac{iZ_f^2}{E_{fD}} + \dfrac{2\sqrt{i}Zf}{F_{CD}}}} \cdot Z + S_{wf}$$

equations wherein:

A, B, C and D are functions of the parameters $Z_w$, $\alpha$ and $\beta$ defined hereinafter, and are respectively defined by the four equations below:

$$A(z_w,\alpha,\beta)=i\frac{z_w}{\sqrt{\alpha}}e^{\frac{i\pi}{4}}[\text{kelbe}_0(\frac{\beta z_w}{\sqrt{\alpha}})\text{kelke}_1(\frac{z_w}{\sqrt{\alpha}})-\text{kelbe}_1(\frac{z_w}{\sqrt{\alpha}})\text{kelke}_0(\frac{\beta z_w}{\sqrt{\alpha}})]$$

$$B(z_w,\alpha,\beta)=\frac{1}{\alpha}[\text{kelbe}_0(\frac{z_w}{\sqrt{\alpha}})\text{kelke}_0(\frac{\beta z_w}{\sqrt{\alpha}})-\text{kelbe}_0(\frac{\beta z_w}{\sqrt{\alpha}})\text{kelke}_0(\frac{z_w}{\sqrt{\alpha}})]$$

$$C(z_w,\alpha,\beta)=i\beta z_w^2[\text{kelbe}_1(\frac{z_w}{\sqrt{\alpha}})\text{kelke}_1(\frac{\beta z_w}{\sqrt{\alpha}})-\text{kelbe}_1(\frac{\beta z_w}{\sqrt{\alpha}})\text{kelke}_1(\frac{z_w}{\sqrt{\alpha}})]$$

$$D(z_w,\alpha,\beta)=i\frac{\beta z_w}{\sqrt{\alpha}}e^{\frac{i\pi}{4}}[\text{kelbe}_0(\frac{z_w}{\sqrt{\alpha}})\text{kelke}_1(\frac{\beta z_w}{\sqrt{\alpha}})-\text{kelbe}_1(\frac{\beta z_w}{\sqrt{\alpha}})\text{kelke}_0(\frac{z_w}{\sqrt{\alpha}})]$$

specifying that, in the equations given below,

$kelbe_n$ $(x)$ = $\ker_n$ $(x)$+ $i\ kei_n$ $(x)$ and $kelbe_n$ $(x)$ = $ber_n$ $(x)$+ $i\ bei_n$ $(x)$ where i is the imaginary number unit in the mathematical theory of complex numbers, and $\ker_n$, $\text{kei}_n$, $\text{ber}_n$, $\text{bei}_n$ are the Kelvin functions; $\alpha = \frac{k_s}{k}$ is the adimensional permeability of the damaged zone, ks representing the permeability of the damaged zone and k representing the permeability of the productive layer; $\beta = \frac{r_s}{r_w}$ is the adimensional radius of the damaged zone, $r_s$ representing the radius of the damaged zone and $r_w$ representing the radius of the well; $z_w = r_w\sqrt{\frac{\omega}{\delta}}$ where $\omega$ is the frequency of the sinusoidal function and $\delta$ is the diffusivity of the productive layer equal to $\frac{k}{\varphi\mu c_t}$, $\varphi$ representing the porosity of the productive layer, $\mu$ representing the viscosity of the fluid and $C_t$ representing the total compressibility of the fluid; $R_0 = \frac{K_0(\sqrt{i}z_w)}{\sqrt{i}z_w k_1(\sqrt{i}z_w)}$ where $K_0$ and $K_1$ are modified Hankel functions; also with $Z_wf = x_f\sqrt{\frac{\omega}{\delta}}$ where $x_f$ is the length of a fracture vane supposed to include two of them; $F_{CD}$ is the adimensional conductivity of the fracture represented by the formula $\frac{k_f W}{k X_f}$, $k_f$ representing the permeability of the material supporting the fracture and w representing the mean thickness of the fracture supported; $E_{fD} = \frac{k_f \varphi C_t}{k \varphi_f C_{tf}}$ is the adimensional diffusivity of the fracture, $\varphi_f$ representing the porosity of the support material filling the fracture and $C_{tf}$ representing the total compressibility of the fluid in the fracture; $S_{wf}$ is an optional skin existing between the base of the well and the entry of the fracture, the method being used by means of a device including a set comprising a controllable shutter (5) capable of modulating, by a sinusoidal function, the flow rate of the fluid in the well, a flow meter (7) and a pressure sensor (9) capable of measuring flow and pressure variations in the fluid, these elements being associated such that, when they are lowered into the well, the flow meter and the pressure sensor are located below the controllable shutter of said pressure sensor (9) including a rigid shell (20), two first and second end walls (21,22) to define, in said shell, a principal closed volume (23), a flexible and elastic membrane (24) arranged inside the principal volume (23) to define, therein, two first and second secondary volumes (25, 26), two first and second orifices (27,28) made respectively in the two first and second end walls (21, 22) so as to bring into communication respectively the two first and second secondary volumes (25, 26) with an external medium, a controllable valve (29) to control the passage of a fluid through the first orifice (27), and means (30) for measuring the deformations in said membrane (24), the controllable shutter (5) being constituted by a turbine (40) controlled so as to be able to cyclically accelerate the flow rate of the fluid in the well during the extraction, between two values both greater than the nominal value of the flow rate of the fluid in the well.

2. The method according to claim 1, **characterized by the fact that** the modulation of the flow rate of the fluid in the well is achieved by an acceleration of the flow rate between two values, both greater than the nominal value of the flow rate of the fluid in the well.

3. A device allowing the use of the method according to one of the previous claims 1 and 2, **characterized by the fact that** it includes a set comprising a controllable shutter (5) capable of modulating, by a sinusoidal function, the flow rate of the fluid in the well, a flow meter (7) and a pressure sensor (9) capable of measuring flow and pressure variations in the fluid, these elements being associated such that, when they are lowered into the well, the flow meter and the pressure sensor are located below the controllable shutter of said pressure sensor (9) including a rigid shell (20), two first and second end walls (21,22) to define, in said shell, a principal closed volume (23), a flexible and elastic membrane (24) arranged inside the principal volume (23) to define, therein, two first and second secondary volumes (25, 26), two first and second orifices (27,28) made respectively in the two first and second end walls (21, 22) so as to bring into communication respectively the two first and second secondary volumes (25, 26) with an external medium, a controllable valve (29) to control the passage of a fluid through the first orifice (27), and means (30) for measuring the deformations in said membrane (24), the controllable shutter (5) being constituted by a turbine (40) controlled so as to be able to cyclically accelerate the flow rate of the fluid in the well during the extraction, between two values both greater than the nominal value of the flow rate of the fluid in the well.

4. The device according to claim 3, **characterized by the fact that** the means (30) for measuring the deformations in said membrane (24) are constituted by deformation gages.

5. The device according to one of claims 3 and 4, **characterized by the fact that** said pressure sensor (9) further includes filters (31,32) associated with the two first and second orifices (27,28).

fig. 1

fig.2

fig.3

52

5

51

1

fig. 4    50

40

1

5

41

fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3559476 A

- FR 2678679 A